# EUROPEAN PATENT APPLICATION

(11) **EP 0 694 833 A1**
(43) Date of publication of application: **31.01.1996**
(21) Application number: 95305040.8
(22) Date of filing: 19.07.1995
(51) Int. Cl.: G06F 3/16, H04R 3/00, G06F 3/00

(54) **Intelligent human interface system**

(30) Priority: 28.07.1994 US 281894
(71) Applicant: AT&T Corp., New York, NY 10013-2412 (US)
(72) Inventor: Atal, Bishnu S., Murray Hill, New Jersey 07974 (US); Marshall, Thomas P., Wantage, New Jersey 07461 (US); Elko, Gary W., Summit, New Jersey 07901 (US); Miller, Robert R., Convent Station, New Jersey 07960 (US)
(74) Representative: Watts, Christopher Malcolm Kelway, Dr.

(57) **Abstract**

A human-computer interactive communications system is presented which facilitates the transfer of information to and from a human and a computer based system. The preferred embodiment describes an Intelligent Human Interface System (IHIS), a computer based order taker of a fast food restaurant, which effectively utilizes automatic speech recognition technology, beam-steerable audio microphone technology, virtual reality imaging and adaptive speakerphone technology. The IHIS communicates with a customer in one of several languages dependant upon the customer and also offers a visual image of the fast food menu in one of several languages.

## Description

### BACKGROUND OF INVENTION

The present invention relates to a system which facilitates verbal and visual interaction between a human and a computer based device. The computer based device receives speech data from the human and projects appropriate communicative components of speech and visual images back to the human in order to acquire sufficient information to achieve a desirable action. The system effectively combines automatic speech recognition technology, beam-steerable audio microphone array technology, virtual reality imaging, and adaptive speakerphone technology to achieve desirable operation in the presence of severe noise and multi-path interference.

### THE PRIOR ART

Speech dialogue systems for facilitating human-computer interaction have been developed which utilize conventional speech recognition techniques, omni-directional microphone pickups, and single frame visual feedback techniques.

A human-computer interaction system is described in European Patent No. EP 0 543 329 A2 which is suited for use as an order taking system in a fast food restaurant. The system uses a key-word spotting technique along with audio and visual feedback to control the transfer of information between the customer and the computer based device such that the bounds of the speech recognition system are not surpassed and a breakdown in communication is avoided. The computer system constantly echoes the order back to the customer for verification because human speech is often corrupted by noise and multi-directional interference. In so repeating and verifying, the computer eventually interprets the order correctly and proceeds, as needed, to fill it.

Advances in beam-steering microphone array technology have provided a means for generating a spectrally accurate representation of the original human speech (audio source) in the presence of severe noise and interference. United States Patent No. 4,741,038 describes a computer controlled, multi-dimensional microphone array which focuses on the speech source without the requirement of any mechanically moving parts. In so doing, the microphone array is highly spatially directional and generates a vastly superior electronic signal representation of the speech utterance as compared to very sophisticated omni-directional microphones.

Human-computer interface systems which gather speech data generally employ conventional speakerphone technology in providing a means for transferring the audio data to and from the computer system. Advances in speakerphone technology have led to the development of a computer controlled, adaptive speakerphone system which approaches the performance level of a full duplex system. An adaptive speakerphone system is described in United States Patent No. 5,007,046 which provides a self calibrating, automatically adjusting system. The adaptive speakerphone, unlike a conventional speakerphone, is functional in highly noisy environments which are also subject to sources of multidirectional interference.

Development of speech recognition systems to include automatic speech recognition and natural language analyzers has provided a means for quickly determining the concept associated with a string of natural speech as well as determining the language itself. AT&T has developed a natural language analysis and automatic speech recognition system which is discussed in the following papers: Roberto Pieraccini and Esther Levin, Stochastic Representation of Semantic Structure for Speech Understanding, SPEECH COMMUNICATION, 11 (1992), at 283; Roberto Pieraccini and Esther Levin, A Learning Approach to Natural Language Understanding, Internal AT&T Corporation Paper (1993); and Roberto Pieraccini, Esther Levin and Chin-Hui Lee, Stochastic Representation of Conceptual Structure in the ATIS Task, Internal AT&T Corporation Paper (1991).

Additionally, the maturation of virtual reality (VR) imaging technology has provided a means for generating a life-like, full motion image representing the computer in a more 'human' form. Current, societal impressions of what is required to experience VR involve a complex assortment of sensors and display goggles which are attached to the body of one who wishes to experience VR. However, experts in the field indicate that a VR experience need not require extensive equipment as described in the following reference: Alan Wexelblat, VIRTUAL REALITY APPLICATIONS AND EXPLORATIONS (1993). Video monitors available today provide a medium which is well suited to providing a VR experience. VR technology facilitates the generation of a full motion, human video image which changes facial and/or bodily expression in accordance with an appropriate, simultaneous verbal segment.

### SUMMARY OF THE INVENTION

The Intelligent Human Interface System (IHIS) of the present invention effectively combines microphone array beam-steering, adaptive speakerphone, natural language recognition, and VR imaging technology to achieve an advanced human-computer interaction system the operation of which is unaffected in environments that have been traditionally troublesome due to extraneous noise and interference.

The IHIS is a microprocessor based system generally comprising a remote communication interface module, interface processing module and local interface module. The above-identified elements work in synergy to facilitate the effective transfer of information between the IHIS and a human being using visual images generated by the IHIS and the preferred spoken language of the human being.

### DESCRIPTION OF THE DRAWING

The invention can be better understood when considered with the following drawing wherein:
FIGURE 1 is a block diagram of the Intelligent Human Interface System of the present invention;
FIGURE 2 is a spatial diagram showing the relationship between a human and the remote communication interface module of the present invention;
FIGURE 3 is a diagram showing the position of the elements of the remote communication interface module of the present invention;
FIGURE 4 is a diagram of the two-dimensional microphone array of the present invention;
FIGURE 5 is a block diagram of the automatic speech recognition and natural language analyzer of the present invention;

### DETAILED DESCRIPTION OF THE PREFERRED EMBODIMENT

### I) General Operation

The preferred embodiment of the present invention relates to using an Intelligent Human Interface System (IHIS) to take an order from a customer at a drive-up window of a fast food restaurant. The IHIS replaces a human order taker who is not only prone to making mistakes but, in most cases, is unable to communicate in multiple languages. The IHIS, on the other hand, recognizes the language used by a customer and makes an adjustment in the language that it uses in the pending 'conversation'. Unlike the computer based systems of the prior art, the IHIS recognizes that there may be more than one audio source, for example a companion of the customer, and responds to the companion as required.

Additionally, the IHIS recognizes the age and sex of both the customer and any companions of the customer thereby contributing to a more unique and life-like conversational experience. For example, when the customer is accompanied by a child, the IHIS may respond verbally and visually in a first instance which satisfies the adult customer and in a second instance in a way which amuses the child. If the customer places an order for the child which is inconsistent with the wishes of the child causing the child to correct the order verbally, then the IHIS responds to the child and asks the adult for verification of a change in the order.

Once the IHIS has received all necessary information from the customer, remittance is accepted and the customer's order is filled.

### II) Detailed Operation

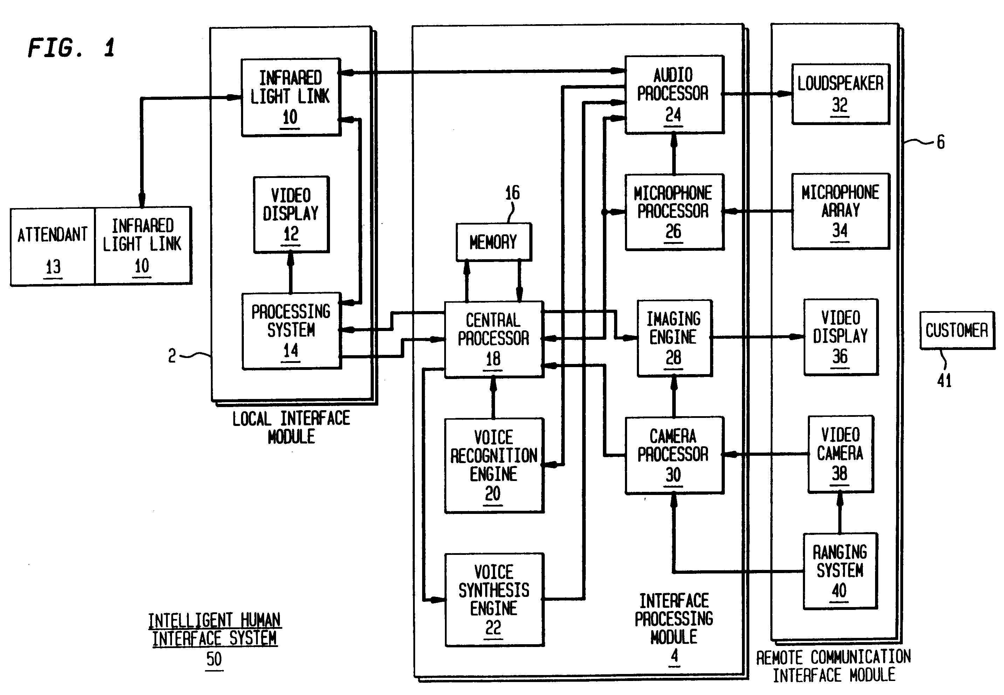

Referring to FIGURE 1, the IHIS 50 generally comprises a local interface module 2, an interface processing module 4, and a remote communication interface module 6.

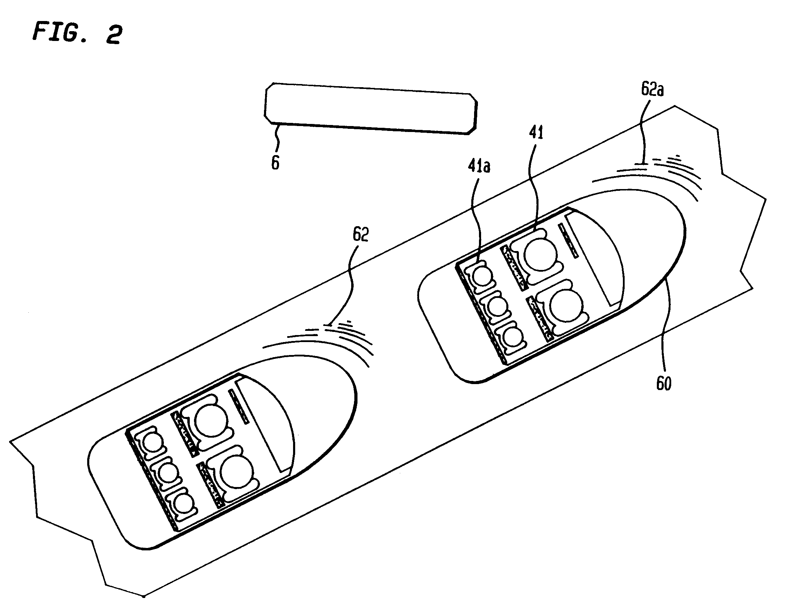

The conversation between the human customer 41 and the IHIS 50, is accomplished at the remote communication interface module 6. The remote communication interface module 6 is generally located at a position which is conveniently accessed by a customer 41. FIGURE 2 shows the relative position of the communication interface module 6 of this embodiment relative to the customer 41 and companion 41a who are in an automobile 60.

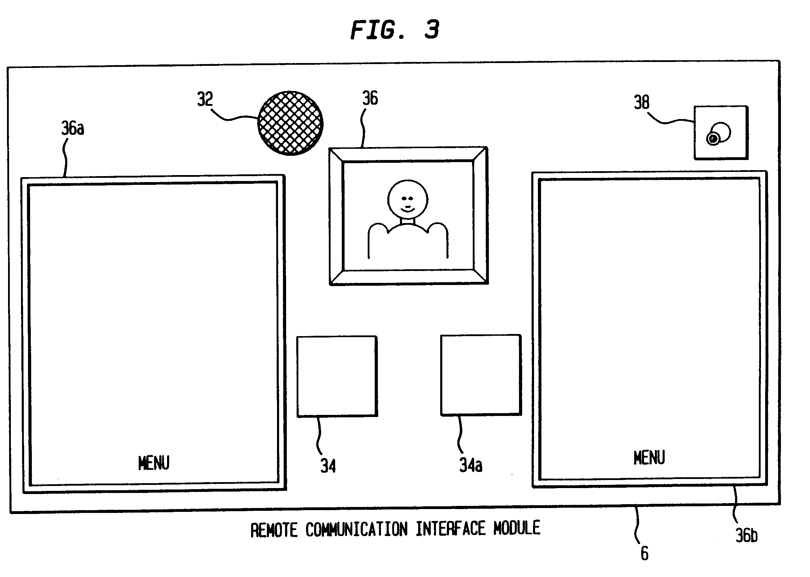

The remote communication interface module 6 comprises a loudspeaker 32, microphone array 34, video display 36, video camera 38, and ranging system 40. FIGURE 3 shows the relative position of the elements of the remote customer interface module 6. The loudspeaker 32 provides a means for delivering an audio response to the customer 41. The loudspeaker 32 is in relative proximity to the video display 36 on which appropriate visual images are displayed which correspond with the speech response.

A first two-dimensional microphone array 34 is used to receive audible speech data from the customer 41 and/or companion 41a. The first microphone array is beam-steerable thus facilitating the reception of a non-corrupted audio signal from the audio source (customer 41 and/or companion 41a). A second two-dimensional microphone array 34a is also beam-steerable and is used to scan the area in which the customer 41 is located in order to recognize additional sources of audio data (companions 41a) and sources of noise and/or interference 62, 62a.

In some instances, only one microphone array 34 is required to acquire audio signals from the customer 41. When a single microphone array 34 is used, scanning the area in which the customer 41 is located is not done.

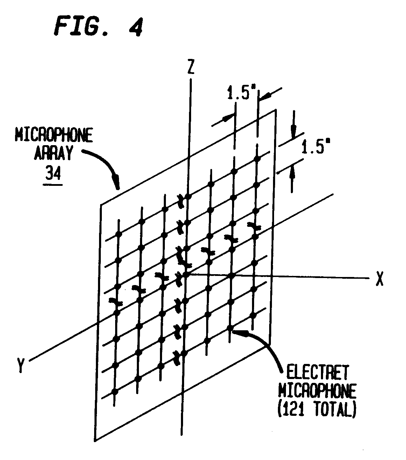

FIGURE 4 shows an array of 121 electret microphones evenly spaced 1.5 inches apart in a square matrix measuring approximately 15 inches by 15 inches which is suited to be used in the present invention in the first and second microphone array 34 and 34a. The position of the microphone arrays 34 and 34a on the remote customer interface module 6 is shown in FIGURE 3. In some instances the microphone array 34a shown in FIGURE 3 is located further away from microphone array 34 depending on the distance between the customer 41 and the remote communication interface module 6.

The ranging system 40 provides a means for electronically locating the customer 41 and or companion 41a so that the video camera 38 properly focuses on the source of audio data. The microphone array 34 and associated circuitry is suited for use in the present invention as a ranging system. Derivatives of signals which properly train the microphone array 34 on the source of audio are used to indicate the precise position of the audio source in three dimensional space. When two microphone arrays 34 and 34a are used, a triangulating algorithm is used to locate the audio source.

The ranging system 40 outputs a signal which is used by the camera processor 30, in this embodiment of the present invention, to command a mechanical drive system (not shown) 5 of the video camera 38. The mechanical drive system responds to the commands of the camera processor 30 and directs the focus of the video camera 38 on the customer 41 and/or companion 41a depending on whom is speaking. A camera processor 30 which is suited to the requirements described in this first embodiment is manufactured and sold by several companies such as Sony, Chinon and Panasonic.

The ranging system 40 outputs a signal which is used by the camera processor 30, in an alternate embodiment, to automatically crop the video image such that the audio source is well framed within the format of the video display 12 without the need for a mechanical drive system. A camera processor 30 which is suited to the requirements described in this alternate embodiment of the present invention is manufactured and sold by both Sony Corporation and Matsushita.

A video camera 38 which is suited to the requirements of the present invention is available from the Sony Corporation. The image captured by the video camera 38 is coupled to the central processor 18 for transfer to the video display 12 of the local interface module 2 when an emergency or malfunction in the normal operation of the IHIS 50 occurs. Thus the attendant 13 communicates directly with the customer 41 to satisfy any extraordinary situation which is best resolved when human to human communication is established.

The elements of the remote communication interface 6 are coupled to the interface processing module 4 which is located inside the fast food establishment (not shown). The interface processing module 4 is a microprocessor based device which interprets the data gathered from the customer 41 by the remote communication interface module 6 and generates appropriate response data, both audible and visual, for presentation by the communication interface module 6 to the customer 41.

Referring to FIGURE 1, the interface processing module 4 comprises a central processor 18, memory 16, voice recognition engine 20, voice synthesis engine 22, audio processor 24, microphone processor 26, imaging engine 28 and camera processor 30.

Microprocessor integrated circuits suited for operation as a central processor 18 and memory 16 of the interface processing module 4 are available from manufacturers such as Motorola and Intel.

The central processor 18 and microphone processor 26 of the interface processing module 4 work in conjunction with the microphone arrays 34 and 34a of the remote communication interface module 6 to produce a beam-steerable audio receiving device as described in United States Patent No. 4,741,038.

The microphone processor 26 provides the central processor 18 with data received by the microphone arrays 34 and 34a which allow the calculation of time-phased difference quantities of the outputs of each electret microphone of each microphone array. The central processor 18 provides the microphone processor 26 with a distinct delay quantity for each electret microphone, calculated in accordance with the time-phased difference quantities, such that once introduced into the signal path, the output signals of the electret microphones sum cophasically. The technique of adjusting the delay quantities such that maximum energy is received by the microphone array 34 is known in the art to be 'delay sum beam forming'. Thus a 'beam' is formed which receives an uncorrupted audio signal from the customer 41 and/or any other qualified audio source.

In an alternate embodiment, the microphone array 34, microphone processor 26 and central processor 18 operate to utilize the technique of adaptive beam forming. The adaptive beam forming technique uses the central processor 18 to generate sets of weighted signals which are input to the microphone processor 26. The microphone processor 26 uses the weighted signals to direct the spatial nulls of the microphone array beam toward sources of noise while directing the main lobe of the microphone array beam towards the desired source of audio. The details of the adaptive beam forming technique are described in United States Patent No. 4,802,227.

It is noted that in an alternate embodiment, the loudspeaker 32 may be an array of many directional loudspeakers. In this alternate embodiment, the central processor 18 provides the audio processor 24 with signals in accordance with the delay sum beam forming technique or the adaptive beam forming technique to train the audio response of the IHIS 50 on the customer 41 and/or 41a. The practical design of a loudspeaker array 32 using one of the aforementioned beam forming techniques is directly analogous to the design of a beam forming microphone array 34. AT&T has developed a prototype loudspeaker array 32 which is suited for use in this alternate embodiment of the present invention.

Thus, when a loudspeaker array 32 is used, the customer 41 receives a clear response without unnecessarily projecting the audio response of the IHIS 50 to other areas. For example, when many IHIS's 50 are used in close proximity, it is important that the audio response from the loudspeaker 32 of one IHIS 50 does not interfere with an adjacent IHIS's 50 conversation. The loudspeaker array 32, as described in this embodiment of the present invention, provides a means for delivering the audio response from the IHIS 50 without disturbing the audible energy content of nearby areas.

A second microphone array 34a constantly scans the area in which the customer 41 is located for other sources of audio in accordance with the teaching of United States Patent No. 4,741,038. Referring to FIGURE 2, additional audio sources are identified as a companion 41a, and extraneous noise sources 62 and 62a. The central processor 18 identifies the extraneous noise sources 62 and 62a as such by calculating the short-time and long-time signal amplitude averages for each beam direction of the second microphone array 34a. Since human speech and extraneous noise have distinctly different relationships between their respective short-time and long-time amplitude averages, the central processor 18 differentiates between the two. In a like manner, the central processor 18 identifies a bona fide additional source of audio data as that from the companion 41a.

When the companion 41a produces a speech utterance which reaches a pre-determined decibel level in excess of the customer 41, the central processor 18 provides a distinct set of delay values to the microphone processor 26 which re-directs the main beam of the first microphone array 34 towards the companion 41a. Likewise, when the customer 41 produces a speech utterance which reaches the predetermined decibel level in excess of the companion 41a, the main beam is again directed toward the customer 41.

The hardware required to implement the microphone array 34 and microphone processor 26 is defined in detail in United States Patent No. 4,741,038.

Thus the central processor 18 receives audio data from multiple sources dependant on the amplitude of the audible energy emitted therefrom. Regardless of the source towards which the beam is pointed, a spectrally accurate (clean) signal representation of audio data is received by the microphone processor 26 without corruption by the noise sources 62 and 62a and/or any other sources of extraneous interference.

An audio processor 24 suited for the requirements of the present invention is the S201 available from GBCS, a division of the AT&T Corporation. The audio processor 24, adjusts the audio volume to a proper level to facilitate an improved conversation with the customer 41. The audio processor 24 increases the signal amplitude input to the loudspeaker 32 in accordance with commands from the central processor 18.

The remote communications interface module 6 seen in FIGURE 3 shows the relative positions of the loudspeaker 32 to the microphone arrays 34 and 34a. During the course of a normal conversation, the IHIS 50 must alternately 'listen' (gather speech data from the customer 41 via the microphone array 34) and 'speak' (project audio responses from the loudspeaker 32). A problem arises if the microphone array 34 is in an active mode; i.e. listening, and the loudspeaker 32 is in an active mode; i.e. speaking, concurrently. In the scenario thus defined, the IHIS 50 would listen to itself talk and, more than likely, not provide the customer with the quality of service expected. The problem is alleviated when adaptive speakerphone technology is introduced into the IHIS system 50. This technology effectively inhibits the active mode of either the microphones 34 and 34a or the loudspeaker 32 depending on the conditions of the conversation between the customer 41 and the IHIS 50.

The central processor 18, audio processor 24, and microphone processor 26 work in synergy to achieve the function of an adaptive speakerphone system as described by United States Patent No. 5,007,046.

Generally, the speakerphone senses when a first party is speaking and a second party listening and vice versa. Thus, when the customer 41 decides to talk while the IHIS 50 is speaking, the IHIS 50 recognizes that the customer 41 is no longer listening, interrupts the audio signal projected from the loudspeaker 32 and gathers speech data from the customer 41 via the microphone array 34. Alternately, when the IHIS 50 senses that the customer 41 has finished speaking, the IHIS 50 inhibits the microphones 34 and 34a from gathering speech data, and projects an appropriate speech response from the loudspeaker 32.

The central processor 18 monitors the audio signal level of the customer 41, companion 41a and its own loudspeaker 32 (via the audio processor 24) in order to correctly determine whether or not to listen or speak. In accordance with United States Patent No. 5,007,046, the customer 41 and/or companion 41a must reach an audible level which is higher than that of the IHIS 50 in order to cause the IHIS 50 to listen instead of speak. Similarly, the IHIS 50 will alternate from listening to speaking once the audible speech level of the customer 41 and/or companion 41a falls below a pre-determined threshold.

The selection of the thresholds for alternating between the speaking/listening mode of the IHIS 50 is critical to achieving performance levels nearly equal to that of a full duplex audio system. If not for the adaptive speakerphone system employed by the present invention, the selection of the threshold levels would be problematic because of the high level of background noise and interference associated with the IHIS 50 environment. Thus, near full duplex operation would not be achievable. The adaptive speakerphone system utilized by the present invention operates to achieve near full duplex performance even in extremely noisy environments.

In accordance with United States Patent No. 5,007,046, the central processor 18 acquires information related to the audible reflectivity, sound decay, and frequency response of the space around the customer 41 by projecting an audio burst from the loudspeaker 32 and analyzing the resultant response received by the microphone array 34. Additionally, the central processor 18 periodically runs a self calibrating program which adjusts gains and offsets of the electronic circuitry associated with the audio processor 24, loudspeaker 32, microphone processor 26, and microphone arrays 34 and 34a. The central processor 18 uses the information acquired through the analysis of the space in the vicinity of the audio sources and from the calibration program to generate time variant threshold levels used for switching between the 'listening' and 'speaking' modes. Thus, despite changing characteristics of the space around the audio source and changes in the electronics due to temperature and aging, the IHIS 50 maintains near full duplex audio communicating performance.

The hardware required to implement the adaptive speakerphone represented in the present invention by the audio processor 24, microphone processor 26, microphone arrays 34 and 34a, and loudspeaker 32 is defined in detail in United States Patent No. 5,007,046.

In an alternate embodiment of the present invention, the central processor 18, audio processor 24 and microphone processor 26 work in synergy to achieve the function of an acoustic echo canceling system as defined in United States Patent No. 5,001,701. An acoustic echo canceling system also achieves near full duplex performance while eliminating the aforementioned feedback problem.

When an acoustic echo canceling system is used, the central processor 18 generates a signal which represents the spectral response of the channel between the loudspeaker 32 and the microphone array 34 to a signal to be projected from the loudspeaker 32. The central processor 18 then combines the generated signal with the signal to be projected from the loudspeaker 32 to cancel any energy which would ordinarily feed back to the microphone array 34.

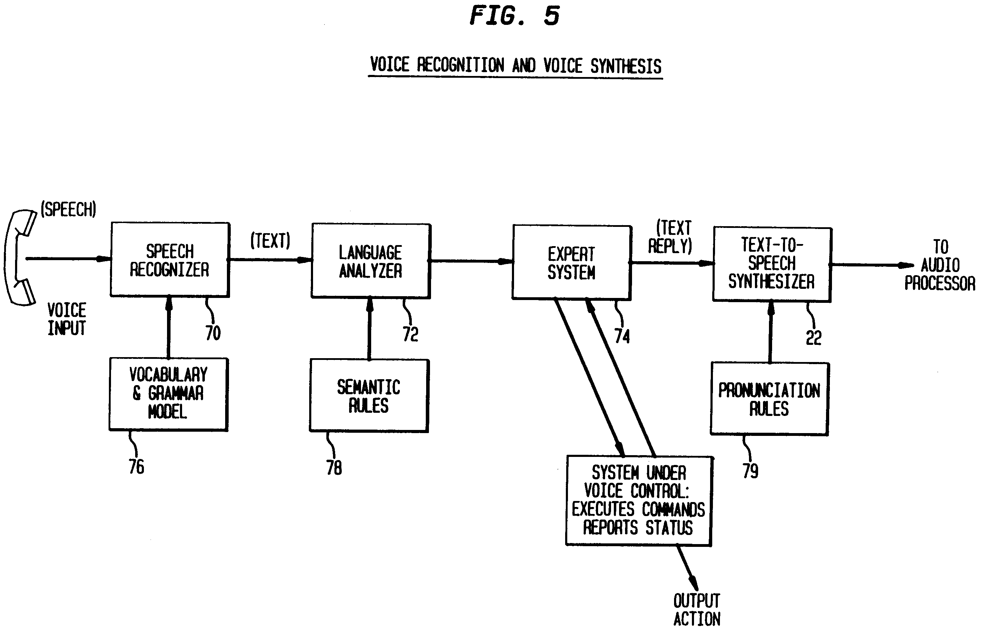

The 'clean' audio data is input to the voice recognition engine 20 from the audio processor 24. Referring to FIGURE 5, the voice recognition engine 20 and the voice synthesis engine 22 generally comprise a speech recognizer 70, language analyzer 72, expert system 74 and text to speech synthesizer 22. The voice recognition engine 20 is implemented using a combination of Digital Signal Processing (DSP) integrated circuits working in conjunction with the microprocessor controller 18. AT&T manufactures DSP chips suitable for use in the present invention. The voice synthesis engine is implemented using one or more integrated circuits dedicated to generating audio signals from computer generated text. AT&T manufactures a text to speech synthesizer which is suited for use as a voice synthesis engine 22 of the present invention.

The speech recognizer 70 converts the spoken words of the customer 41 into text, using the vocabulary & grammar model 76, which is then temporarily stored in memory 16. Speech recognizers are well known in the art and are readily available for purchase from AT&T.

The natural language analyzer 72 takes the text as input and uses a stochastic Hidden Markov Model (HMM) in the conversion of the text to a correct concept. In using a stochastic model, the language analyzer of the present invention is capable of quickly converting natural language into correct concepts without requiring multiple queries by the IHIS 50. The language analyzer 72 calculates the probability of association that a particular input word or phrase has if matched with a stored concept. The language analyzer 72 matches the word or phrase with the concept which has the highest probability of association. The stochastic HMM properly matches approximately 100 concepts with over 50,000 phrases encountered in the natural speech associated with a fast food restaurant.

When a new word or phrase is encountered which matches an existing concept, the voice recognition engine 20 adds the new word or phrase to the vocabulary model 76 and the semantic rules 78 as well as storing a new probability of association corresponding to the new word or phrase and the matched concept. Thus, the voice recognition engine 20 learns new words and phrases over time.

The expert system 74 generates an output action and deduces an appropriate response based on the known concept as well as the gender and relative age of the customer 41 and/or companion 41a. Generally, one output action corresponds to one concept and the central processor 18 readily attains the appropriate output action using a table look-up technique. When one concept matches more than one action, the IHIS 50 queries the customer 41 thus gaining additional information and eliminating any ambiguity regarding the desired action.

The sex and age of the customer 41 are determined by examining the frequency domain spectral content of a sample of his/her speech. The spectral content of a male speech sample is generally concentrated an octave lower than that of a female speech sample. Similarly, the spectral content of a speech sample from a child has its own unique signature. Fourier transform algorithms which are well known in the art are executed by the central processor 18 to transform a time domain speech sample to the frequency domain in order to differentiate the age and gender of the customer 41 and/or companion 41a.

The expert system 74 uses the concept, output action, relative age of the customer 41 and sex of the customer 41 to select an appropriate response from a stored table of responses. The verbal response is selected and converted into text by the expert system 74. The response text is input to the voice synthesis engine 22 (text to speech synthesizer) which uses pronunciation rules 79 to generate electrical signals which is input to the audio processor 24.

Having input 'clean' audio signal representations of the speech data of the customer 41 and/or 41a, the speed that the voice recognition engine 20 dissects the speech and 5 deduces the appropriate concept is increased because error rates caused by noise and interference are reduced. Similarly, proper determination of customer sex and relative age is assured by gathering a clean speech sample with which to generate a frequency domain signature.

The voice recognition engine 20 is not limited to understanding only the English Language. Recognition and analysis of multiple languages such as Spanish, French, Japanese and Chinese is known in the art and is readily achieved by the voice recognition engine 20. The voice recognition engine 20 simply accesses the appropriate vocabulary & grammar model 76, semantic rules 78, and pronunciation rules 79 from the memory 16 once a particular language is detected at the audio source. Since the language is determined at the outset of the conversation between the customer 41 and the IHIS 50, the menu monitors 36a and 36b display the menu of the fast food establishment in one of several stored languages.

The interface processing module 4 is coupled to the local interface module 2 and provides the module 2 with the data representing the fast food order of the customer 41. The local interface module 2, located in close proximity to the food preparation area (not shown), within the fast food establishment, is comprised of a processing system 14, video display 12, and infrared light link 10. Microprocessor integrated circuits suited for operation as a processing system 14 of the local interface module 2 are available from manufacturers such as Motorola and Intel.

The output action data are coupled from the central processor 18 to the processing system 14 of the local interface module 2. The processing system 14 organizes the text representing the output action (food order) into a format which is presented to the attendant 13. The processing system 14 drives the video display 12 with visual information representing the food order and drives the infrared light link 10 with audio signals representing the food order. The attendant 13 responds to the visual and audible information by preparing the food order for delivery to the customer 41. A full duplex IR light link which is suited to the requirements of the present invention is called the 'Lite-Link' and is available from the AT&T Corporation.

It is noted that any wireless link such as a radio frequency link may be substituted for the infrared light link 10. As the central processor 18, voice recognition engine 20 and voice synthesis engine 22 deduce the appropriate response to be presented to the customer and/or companion 41a, the imaging engine 28 receives commands from the central processor 18 which determine the details of the visual image to be displayed on the video display 36. The imaging engine 28 and central processor 18 follow production rules which are stored in the memory 16. The production rules determine the selection of characters and background terrain as well as determining scene composition, spatial depth and character occlusion.

An imaging engine 28 which is suited for use in the present invention is available from companies such as VPL Research and Simgraphics.

Once the general scene is painted on the video display 36, the imaging engine 28 manipulates the movements of the characters and images, in accordance with the commands of the central processor 18, to follow the meaning and content of the speech and other audio data generated by the voice synthesis engine 22. For example, if the scene on the video display 36 is comprised of a human face, the mouth is manipulated, via the central processor 18 and the imaging engine 28, to move synchronously with the speech data projected from the loudspeaker 32. Additionally, the facial expression of the human face is manipulated, in the same way, to reinforce the meaning and content of the speech.

When the entire customer order is received, the IHIS 50 prompts the current customer to move to the pick-up area (not shown) of the fast food establishment and is ready to take the order of another customer.

Means for making payment transactions automatically are well known in the art and are available from Global Information Systems (GIS), a division of the AT&T Corporation. The automatic payment means is microprocessor based and is coupled to the central processor 18. Thus, the customer 41 completes a monetary exchange with the IHIS 50 prior to pick up of the completed order.

A means for automatically storing and dispensing a filled order which is stored prior to pick up by a customer is well known in the art and is available from the Raymond Corporation and Logisticon Corporation. The automatic storing and dispensing means is microprocessor based and coupled to the central processor 18 and, therefore, is easily controlled thereby. Once the attendant 13 has processed the order, he/she places the full order into a holding means of the automatic storing and dispensing means. Thus the order is ready for dispensation when the central processor 18 determines that an on-site customer 41 has met the payment obligation and is awaiting his/her order.

In addition, the IHIS 50 accommodates the customer who calls his/her fast food order over the telephone for pick up at a later time. The IHIS 50 communicates with the customer in the same way as previously described with the exception of providing a video image as part of a response. During the conversation, the IHIS 50 stores a sample of the speech data of the customer in the memory 16. When the customer arrives at the fast food establishment to pick up the order, the IHIS 50 briefly converses with the customer 41, recognizes that he or she has previously called in the order over the telephone, and matches the spectral voice signature of the particular customer with one of many orders which are ready for pick up. The central processor 18 commands the automatic storing means to dispense the order accordingly.

It is noted that the IHIS 50 may have more than one remote communication interface 6. In alternate embodiments which readily follow from the discussion above, a remote customer interface module 6 may be located at the payment area and the pick-up area of the fast food restaurant. By placing additional remote communication interface modules at critical locations of the fast food restaurant, needless delays are avoided. For example, at the payment area, a customer may wish to purchase an additional item. The customer would communicate his/her additional order to the remote customer interface module at the payment area. Also, questions regarding payment are readily answered when a remote customer interface module is available at the payment area.

The IHIS 50 computer based order taker is demonstrated by means of the following prophetic example. A customer 41 accompanied by at least one child 41a drives up to the remote communication interface module 6. The IHIS 50 projects a human face onto the video display 36 which says," Welcome to Joe's Burgers. Is our menu written in your preferred language?" The customer 41 responds, "Yes English is fine. I would like two hamburgers and one soda."

At the outset of the speech utterance by the customer 41, the IHIS 50 steers the microphone array 34 directly to the face of the customer 41 such that the speech of the customer 41 is received clearly while the noise sources 62 and 62a are not received. The speech data are processed through filter, gain and offset circuits of the microphone processor 26 and audio processor 24 before being input to the voice recognition engine 20.

The speech recognizer 70 of the voice recognition engine 20 converts the processed speech data into ASCII text using the vocabulary & grammar model 76. The ASCII text is input to the language analyzer 72 and expert system 74 and associated with a particular concept or set of concepts through a stochastic program which accesses the semantic rules 78. The concepts are chosen from a stored set of concepts in the memory 16. The expert system 74 also matches output actions with the chosen concepts which are coupled from the central processor 18 to the processing system 14 of the local interface module 2.

A Fourier Transform algorithm program stored in the memory 16 and executed by the central processor 18 produces the frequency spectrum of at least a portion of the speech data prior to being input to the speech recognizer 70. The central processor 18 uses a logic program to determine the relative age and gender of the customer 41 or companion 41a.

The IHIS 50 thus has obtained an output action associated with the fast food order of the customer 41 as well as the sex and relative age of the customer 41 and companion 41a.
- OUTPUT ACTIONS:: i) prepare two hamburgers
ii) prepare one soda
- CUSTOMER INFORMATION:: i) adult customer
ii) female customer
iii) child companion

The expert system 74 deduces an appropriate response based on the output action and customer 41 information. The responses are partially or fully stored in a table of the memory 16 and are accessed by the expert system 74. The response is in the form of ASCII text and is converted into a digital audio signal by the voice synthesis engine 22. The digital audio signal is filtered and amplified by the audio processor 24 and projected to the customer 41 through the loudspeaker 32.

The IHIS 50 verbally and visually responds to the customer, "Very good ma'am. We are processing your order. Please proceed to the payment teller to make your payment. Thank you for your order." The visual image is determined by the imaging engine 28 which accesses stored images of the memory 16. The images are synchronized with the audio output of the loudspeaker 32.

The processing system 14 of the local interface module 2 displays the output action (ASCII text) in a format which efficiently conveys the desired output action to the attendant 13. Additionally, another voice synthesis engine (not shown) within the processing system 14 converts the ASCII text into an audio signal for transmission over the infrared light link 10. The attendant 13 reads, via the video display 12, or listens, via the infrared light link 10, for the output action representing the fast food order of the customer 41. The attendant 13 prepares the order and places it in the automatic storing and dispensing means (not shown) for access by the customer 41.

The customer 41 drives up to the payment teller. The remote communication interface module at the payment teller (not shown) prompts the customer 41, "Your order costs $5.35. Please insert payment." The customer inserts the proper remittance into the- automatic payment device. The IHIS 50 responds to the payment, "Thank You. Please receive your order at the pick-up window." The customer 41 moves to the pick-up window and encounters another remote communication interface module (not shown). The IHIS 50 says, "Hello, have you come to pick-up two hamburgers and one soda?" The customer responds, "Yes." The automatic storing and dispensing means releases the order to the customer 41. The IHIS 50 says, "Enjoy your meal and please come again!"

## Claims

1. A computer to human and human to computer communicative interface system comprising:
means for projecting and receiving information comprising audible information to and from a human subject from a computer based system at a first location and
means for processing said received information and generating said projected information at a second location,
said means for projecting and receiving further comprising: a loudspeaker and at least one beam-steerable microphone array.

2. The communicative interface of claim 1 wherein projected and received information also comprises visual information and wherein said means for projecting and receiving also comprises a video camera.

3. The communicative interface system of claim 1 or claim 2 wherein at least one microphone array is a multi-dimensional, beam-steerable audio receiving array.

4. The communicative interface system of any of the preceding claims wherein the means for projecting and receiving further comprises an adaptive speakerphone system.

5. The communicative interface system of any of the preceding claims wherein said means for processing said received information and generating said projected information comprises a natural language recognizer, said natural language recognizer comprising a stochastically based Hidden Markov Model providing a means for determining the conceptual content of human speech.

6. The communicative interface system of any of the preceding claims wherein said means for processing said received information further comprises a means for determining the relative age and sex of the human subject.

7. The communicative interface system of any of the preceding claims wherein said means for processing said received information further comprises a means for determining the preferred language of the human subject.

8. The communicative interface system of any of the preceding claims wherein said means for generating said projected information comprises an expert system providing a means for determining an appropriate audible response based on a computer derived concept of the human subject's speech.

9. The communicative interface system of claim 2 or any of claims 3 to 8 as dependent on claim 2, wherein said projected visual information comprises at least one human facial image, said facial image providing mouth movement and facial expression in accordance with said projected audible information.

10. The communicative interface system of claim 2 or any of claims 3 to 9 as dependent on claim 2, wherein said communicative interface system further comprises a local interface module, said local interface module providing a means for displaying a visual representation of at least one output action resulting from the computer derived concept of the human subject's speech.
